# EUROPEAN PATENT APPLICATION

(11) **EP 2 704 400 A1**
(43) Date of publication of application: **05.03.2014**
(21) Application number: 13178596.6
(22) Date of filing: 30.07.2013
(51) Int. Cl.: H04L 29/08

(54) **Apparatus for managing user-centric context and method thereof**

(30) Priority: 04.09.2012 KR 20120097624
(71) Applicant: Postech Academy-Industry- Foundation, Pohang-si, Gyeongbuk 790-784 (KR)
(72) Inventor: Hong, Won Ki, 790-784 Gyeongbuk (KR); Seo, Sin Seok, Gyeongbuk 790-784 (KR); Kang, Joon Myung, Toronto, Ontario M2N 7A1 (CA); Han, Yoon Seon, Gyeongbuk 790-784 (KR)
(74) Representative: Zimmermann, Tankred Klaus

(57) **Abstract**

Disclosed are an apparatus and method for managing user-centered context, the apparatus including a sensor level unit including a plurality of sensors to transmit respective pieces of first context collected from the plurality of sensors, a domain level unit including a plurality of domain context management modules (domain_U-CoUDE) to produce a first inferred context by aggregating and inferring a corresponding second context among the respective pieces of first context by use of a context model and transmit the produced first inferred context, and a user level unit including a plurality of user context management modules (user_U-CoUDE) to produce and transmit a second inferred context by aggregating and inferring the first inferred context by use of the context model, so that different forms of context generated from various domains are converted into a standardized from, thereby providing and using the context in a more efficient manner.

## Description

### CLAIM FOR PRIORITY

This application claims priority to Korean Patent Application No. 10-2012-0097624 filed on Sept. 4, 2012 in the Korean Intellectual Property Office (KIPO), the entire contents of which are hereby incorporated by reference.

### BACKGROUND

### 1. Technical Field

Example embodiments of the present invention relate in general to the field of management of context, and more specifically to an apparatus for managing user-centric context and a method thereof.

### 2. Related Art

With a development in technology of networking, sensors, and portable terminals, equipment and apparatuses that can produce user-related context proliferate. The equipment or apparatuses as the above are included in a certain domain, such as smartphones, tablets, notebooks, smart homes, various sensors and Social Networking Services (SNSs). In addition, context about other users socially associated with a certain user also provide useful information. In this case, the context may be used by various context application programs or services.

Meanwhile, the level of context management may be classified into three stages below:
- domain level: collecting and using context in a certain single domain
- user level: collecting context in various domains associated with a certain user and managing context in a comprehensive manner
- social level: considering context about other users socially associated with a user as well as user level management

In recent years, context related to a certain user is not only produced from a single domain but also from various domains. For example, a u-Health service for exploiting a smartphone, u-Health sensors, and context about a family in a comprehensive manner is present. In the u-Health service, the smartphone serves to send a message in an emergency situation and to provide precise position information about a user, the u-Health sensors provide information about a health state of a user, and the context about the family provides distance information between the family and the user. If the u-Health sensor finds an emergency health condition of a user, heath state information related to the emergency health condition of the user and precision position information about the user are delivered to a family located at a nearby area through a message sending function of the smartphone. Such a service of simultaneously exploiting context of various domains requires a user-level or social-level context management.

However, a conventional context management apparatus is kept in the domain level in which only a single domain is considered, and the context management apparatus of the domain level has a difficulty in comprehensively inferring context generated from various domains as the above.

In addition, since the convention context management apparatus has a difficulty in comprehensively inferring context generated from various domains, leading to a difficulty in providing a user with context in a more useful form.

### SUMMARY

Accordingly, example embodiments of the present invention are provided to substantially obviate one or more problems due to limitations and disadvantages of the related art.

Example embodiments of the present invention provide an apparatus for managing context capable of comprehensively inferring context generated from various domains by providing a context model and a hierarchical model between context and a provider of context that can be flexible and extensible and represent various types of context, which are mixed around a user, in a common form.

Example embodiments of the present invention also provide a method of managing user-centric context capable of comprehensively managing and exploiting user-centric context.

In some example embodiments, an apparatus for managing user-centric context includes a sensor level unit, a domain level unit and a user level unit. The sensor level unit may be composed of a plurality of sensors and configured to transmit respective pieces of first context collected from the plurality of sensors. The domain level unit may be composed of a plurality of domain context management modules (domain_U-CoUDE) configured to produce a first inferred context by aggregating and inferring a corresponding second context among the respective pieces of first context by use of a context model and to transmit the produced first inferred context. The user level unit may be composed of a plurality of user context management modules (user_U-CoUDE) configured to produce a second inferred context by aggregating and inferring the first inferred context, which is transmitted from the plurality of domain context management modules, by use of the context model.

The plurality of domain context management modules and the plurality of user context management modules may produce and provide the first inferred context and the second inferred context, respectively, by use of a hierarchical model between context and a provider of context in common.

In other example embodiments, an apparatus for managing user-centric context, the apparatus includes a translation module, a change detection module, a conflict resolution module, and an inference module. The translation module may be configured to convert different forms of context into a standardized form by use of a context model so as to produce respective pieces of common context corresponding to the different types of context, respectively. The change detection module may be configured to determine a presence of difference between the respective pieces of common context and respective pieces of aggregated context stored while corresponding to the respective pieces of common context, and depending on the presence of the difference, determine whether to transmit the respective pieces of common context. The conflict resolution module may be configured to classify transmitted respective pieces of common context among the respective pieces of common context according to a same type, resolve a conflict between the transmitted respective pieces of common context within the same type, and transmit a result of the resolution as the aggregated context. The inference module may be configured to infer a new inferred context by use of the aggregated context and transmit the new inferred context as the aggregated context.

The translation module may produce the respective pieces of common context by use of a hierarchical model between context and a provider of context in common.

The apparatus may further include a context collection module, a resource management module, a database, a context service module and a security module. The context collection module may be configured to collect the different forms of context from a plurality of sensors and transmit the collected different forms of context to the translation module. The resource management module may be configured to provide the context collection module with a list of the plurality of sensors usable by the context collection module. The database may be configured to store the aggregated context. The context service module may be configured to provide a context application program with the aggregated context. The security module may be configured to protect the aggregated context against an unauthenticated update and a request having no permission to use.

The change detection module may be turned on or off depending on whether the respective pieces of common context correspond to emergency context.

In still other example embodiments, a method of managing user-centric context, the method includes collecting respective pieces of first context from a plurality of sensors and transmitting the collected respective pieces of first context, producing a first inferred context by aggregating and inferring a corresponding second context among the respective pieces of first context by use of a context model and transmitting the produced first inferred context, and producing a second inferred context by aggregating and inferring the first inferred context by use of the context model and transmitting the produced second inferred context.

In the producing of the first inferred context and the producing of the second inferred context, a hierarchical model between context and a provider of context that is defined as a hierarchical relationship between context and a provider of context may be used in common.

In still other example embodiments, a method of managing user-centric context, the method includes a first operation, by use of a context model, converting different forms of context into a standardized form so as to produce respective pieces of common context corresponding to the different types of context, respectively, a second operation determining a presence of difference between the respective pieces of common context and respective pieces of aggregated context stored while corresponding to the respective pieces of common context, and depending on the presence of the difference, determining whether to transmit the respective pieces of common context, a third operation classifying transmitted respective pieces of common context among the respective pieces of common context into a same type, resolving a conflict between the transmitted respective pieces of common context within the same type, and transmitting a result of the resolution as the aggregated context, and a fourth operation inferring a new inferred context by use of the aggregated context and transmitting the new inferred context as the aggregated context.

In the first operation, the respective pieces of common context may be produced by use of a hierarchical model between context and a provider of context, which is defined as a hierarchical relationship between context and a provider of context, in common.

The method may further include collecting the different forms of context from a plurality of sensors, storing the aggregated context in a database, and providing the aggregated context to a context application program.

The second operation may be omitted in a case in which the respective pieces of context correspond to an emergency situation.

As is apparent from the user-centric context management apparatus and method above described, various types of context around a user are comprehensively inferred, and thus the user can use the context in a further efficient manner.

### BRIEF DESCRIPTION OF DRAWINGS

Example embodiments of the present invention will become more apparent by describing in detail example embodiments of the present invention with reference to the accompanying drawings, in which:
FIG. 1 is a block diagram schematically illustrating an apparatus for managing user-centric context according to an embodiment of the present invention.
FIG. 2 is a block diagram schematically illustrating an example of U-CoUDE according to an embodiment of the present invention used as a domain_U-CoUDE and a user_U-CoUDE of FIG. 1.
FIG. 3 is a view illustrating a conceptual structure of a context model according to an embodiment of the present invention.
FIG. 4 is a view illustrating a conceptual structure of a hierarchical relationship model between context and a provider of context according to an embodiment of the present invention.
FIG. 5 is a flowchart schematically showing a method of managing user-centric context according to an embodiment of the present invention.

### DESCRIPTION OF EXAMPLE EMBODIMENTS

Example embodiments of the present invention are disclosed herein. However, specific structural and functional details disclosed herein are merely representative for purposes of describing example embodiments of the present invention, however, example embodiments of the present invention may be embodied in many alternate forms and should not be construed as limited to example embodiments of the present invention set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the spirit and scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between", "adjacent" versus "directly adjacent", etc.).

The terminology used herein is for the purpose of describing particular embodiments only and is not intended to be limiting of the invention. As used herein, the singular forms "a", "an," and "the" are intended to include the plural forms as well, unless the context clearly indicates otherwise. It will be further understood that the terms "comprises", "comprising,", "includes," and/or "including", when used herein, specify the presence of stated features, integers, steps, operations, elements, components, and/or groups thereof, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It should also be noted that in some alternative implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved.

Hereinafter, preferred embodiments according to the present invention will be described in detail with reference to the accompanying drawings.

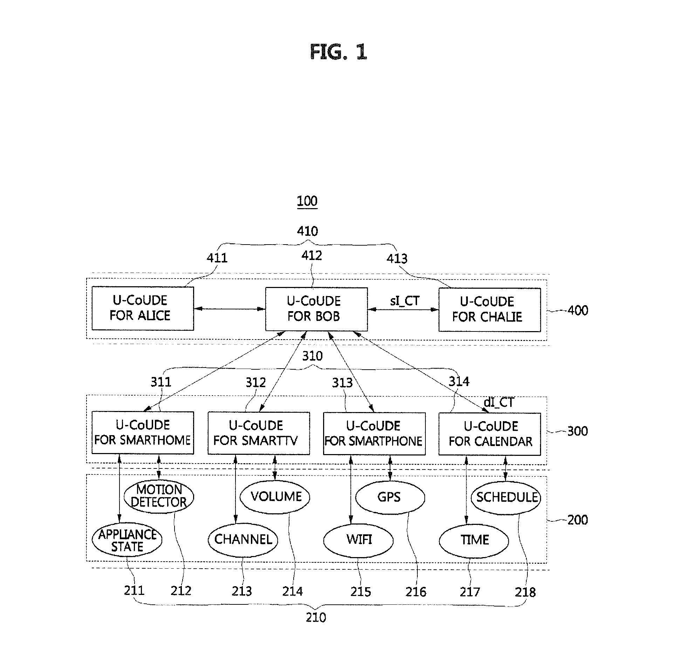

FIG. 1 is a block diagram schematically illustrating an apparatus for managing user-centric context according to an embodiment of the present invention.

A U-CoUDE of a domain_U-CoUDE 310 and a user_U-CoUDE 410 used in an embodiment of the present invention is an apparatus for managing context (CT) distributed over various domains, based on a user, and is named for User-centric Context manager for Ubiquitous and Distributed Environment.

Referring to FIG. 1, an apparatus for managing centric context 100 according to an embodiment of the present invention may include a sensor level unit 200, a domain level unit 300, and a user level unit 400.

The sensor level unit 200 is composed of a plurality of sensors 210, and is configured to collect different forms of context CT respectively corresponding to the plurality of sensors 210, and transmit the collected different forms of context to the domain level unit 300.

In this case, the plurality of sensors 210 may be, for example, a physical sensor or a virtual sensor. The physical sensor is an apparatus for collecting and transmitting context CT by use of a physical hardware, and is most widely used to collect context CT. The virtual sensor is an apparatus for collecting and transmitting context CT by use of a software application program or service existing in a cyber-space.

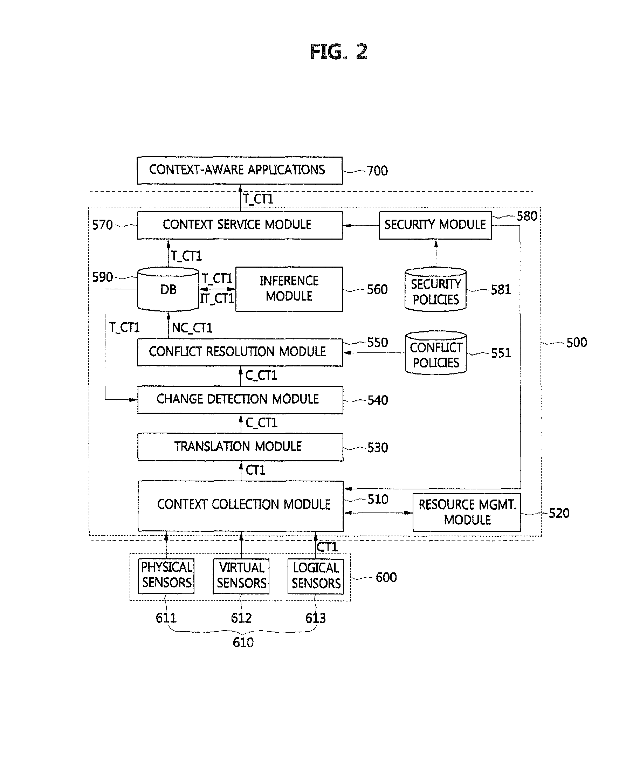

To this end, the sensor level unit 200 may include the plurality of sensors 210 respectively corresponding to a plurality of domain_U-CoUDEs 310 forming the domain level unit 300. In detail, the sensor level unit 200, for example, may include a home appliance state sensor 211 and a motion detecting sensor 212 each corresponding to a smart home domain_U-CoUDE 311, a channel information sensor 213 and a volume information sensor 214 each corresponding to a smart TV domain_U-CoUDE 312, a WiFi 215 and a global positioning system (GPS) 216 each corresponding to a smartphone domain_U-CoUDE 313, and a time information sensor 217 and a schedule information sensor 218 each corresponding to an electronic calendar domain_U-CoUDE 314. Detailed description of the domain_U-CoUDEs 310 will be made with reference to FIG. 2 later.

The domain level unit 300 produces a domain inferred context dI_CT by aggregating and inferring the respective pieces of context CT received from the plurality of sensors 210, and transmits the produced domain inferred context dI_CT to the user level unit 400.

To this end, the domain level unit 300 may include the plurality of domain_U-CoUDEs 310. The plurality of domain_U-CoUDEs 310 produce the domain inferred context dI_CT by receiving respective pieces of context CT from the plurality of corresponding sensors 210, and aggregating and inferring the received respective pieces of context CT. In detail, the domain level unit 300 may include the domain_U-CoUDEs 311, 312, 313, and 314 respectively corresponding to the smart home, the smart TV, the smartphone and the electronic calendar. In this case, the domain_U-CoUDE 311 for the smart home receives context CT from each of the home appliance state sensor 211 and the motion detecting sensor 212, and aggregates and infers the each context CT received, thereby producing a domain inferred context dI_CT corresponding to the aggregated and inferred context CT received. For more example, the domain_U-CoUDE 312 for the smart TV receives context CT from each of the channel information sensor 213 and the volume information sensor 214, and aggregates and infers the each context CT received, thereby producing a domain inferred context dI_CT corresponding to the aggregated and inferred context CT received. The domain_U-CoUDE 313 for the smartphone receives context CT from each of the WiFi 215 and the GPS 216, and aggregates and infers the each context CT received, thereby producing a domain inferred context dI_CT corresponding to the aggregated and inferred context CT received. The domain_U-CoUDE 314 for the electronic calendar receives context CT from each of the time information sensor 217 and the schedule information sensor 218, and aggregates and infers the each context CT received, thereby producing a domain inferred context dI_CT corresponding to the aggregated and inferred context CT received.

That is, since the domain_U-CoUDEs 310 of the domain level unit 300 produce new inferred context dI_CT by aggregating and inferring the respective pieces of context CT received from the plurality of sensors 210 and transmit the new inferred context dI_CT, the domain_U-CoUDEs 310 each serves as a logic sensor with respect to a context application program (not shown), a context application service (not shown), or the user_ U-CoUDEs 410 located at the user level unit 400.

The user level unit 400 produces and provides a social inferred context sI_CT by aggregating and inferring the respective pieces of domain_inferred context dI_CT received from the plurality of domain_U-CoUDEs 310.

To this end, the user level unit 400 may include a plurality of user_U-CoUDEs 410. The plurality of user_U-CoUDEs 410 receive respective pieces of domain_inferred context dI_CT from the plurality of domain _U-CoUDEs 310 of the domain level unit 300 and produces the social inferred context sI_CT by aggregating and inferring the received respective pieces of domain_inferred context dI_CT. In detail, the user level unit 400 may include user_U-CoUDEs 411, 412, and 413 respectively corresponding to users named as Alice, Bob, and Chalie. In this case, the user_U-CoUDE 412 for the user named as Bob receives respective pieces of domain inferred context dI_CT from the domain_U-CoUDE 311 for the smart home, the domain_U-CoUDE 312 for the smart TV, the domain_U-CoUDE 313 for the smartphone, and the domain_U-CoUDE 314 for the electronic calendar that form the domain level unit 300, and aggregates and infers the respective pieces of domain inferred context dI_CT, thereby producing respective pieces of social inferred context sI_CT. Similarly, the user_U-CoUDEs 411 and 413 for the users named as Alice and Chalie receive domain inferred context dI_CT from the domain_U-CoUDE 310 of the domain level unit 300, and aggregate and infer the domain inferred context dI_CT, thereby producing social inferred context sI_CT. The detailed description of the user_U-CoUDEs 410 will be made later with reference to FIG. 2.

In this case, the produced social inferred context sI_CT may be provided, for example, to the context application program or the context application service that may use the social inferred context sI_CT. In addition, the social inferred context sI_CT produced from the user_U-CoUDEs 410 for the respective users may be delivered to the user_U-CoUDEs 410 for another user associated with one user. In detail, for example, the social inferred context sI_CT produced from the user_U-CoUDE 412 for Bob may be delivered to the user_U-CoUDE 411 for Alice or the user_U-CoUDE 413 for Chalie. Through this, each user may consider the context about other users socially associated with the each user, and thus obtain context in a social level.

As described above, the apparatus for managing user-centric context according to an embodiment of the present invention may attain a user level and social level context management without staying at a domain level context management, by constructing the domain_U-CoUDE 310 and the user_U-CoUDE 410 respectively corresponding to the domain level unit 300 and the user level unit 400.

Hereinafter, referring to FIG. 2, the U-CoUDEs (310 and 410 in FIG. 1) according to an embodiment of the present invention will be described in detail.

FIG. 2 is a block diagram schematically illustrating an example of a U-CoUDE according to an embodiment of the present invention used as the domain_U-CoUDE (310 in FIG. 1) and the user_U-CoUDE (410 in FIG. 1).

Referring to FIG. 2, a U-CoUDE 500 collects a first context CT1 from an integrated sensor unit 600 while communicating with the integrated sensor unit 600, produces aggregated context T_CT1 by aggregating and inferring the collected first context CT1, and provides the aggregated context T_CT1 to a context-aware application 700.

First, the integrated sensor unit 600 and the context-aware application 700 will be described.

The integrated sensor unit 600 is composed of a plurality of sensor units 610, and transmits respective pieces of first context CT1 corresponding to the plurality of sensor units 610 to the U-CoUDE 500.

Here, the plurality of sensor units 610, for example, may be composed of a physical sensor unit 611, a virtual sensor unit 612, and a logical sensor unit 613.

The physical sensor unit 611 is composed of a plurality of physical sensors and provides respective pieces of first context CT1 corresponding to the physical sensors to the U-CoUDE 500, and the virtual sensor unit 612 is composed of a plurality of virtual sensors and provides respective pieces of first context CT1 corresponding to the virtual sensors to the U-CoUDE 500. In this case, the physical sensor unit 611 and the virtual sensor unit 612, for example, may represent the sensor level unit 200 (200 in FIG. 1), and the first context CT1 may represent the context (CT illustrated in FIG. 1).

The logical sensor unit 613 provides the U-CoUDE 500 with context, which is newly produced by aggregating and inferring the respective pieces of first context CT1 collected from the physical sensor unit 611, the virtual sensor unit 612, and the logical sensor unit 613, as first context CT1. When viewed in conjunction with FIG. 1, since the domain_U-CoUDEs (310 in FIG. 1) of the domain level unit (300 in FIG. 1) receive respective pieces of context (CT in FIG. 1) from the corresponding plurality of sensors (210 in FIG. 1), and produce and provide respective pieces of domain inferred context (dI_CT in FIG. 1) by aggregating and inferring the respective pieces of context (CT in FIG. 1), the domain_U-CoUDEs (310 in FIG. 1) serve as a logical sensor. That is, domain inferred context (dI_CT in FIG. 1) newly produced by inferring respective pieces of context (CT in FIG. 1) may become first context CT1.

The context-aware application 700 is a program that uses the aggregated context T_CT1 provided from the U-CoUDE 500, and may represent for example a context-aware application or service that uses the user_U-CoDUE (410 in FIG. 1) of the user level unit 400 or the domain inferred context (dI_CT in FIG. 1) of the domain_U-CoDUE (310 in FIG. 1). Meanwhile, the context-aware application 700 is not limited to an application program that uses context, and may represent a service that uses context.

Here, the U-CoUDE 500 will be described in more detail.

The U-CoUDE 500 may include a context collection module 510, a resource management module 520, a translation module 530, a change detection module 540, a conflict resolution module 550, an inference module 560, a context service module 570, and a security module 580.

In addition, the U-CoUDE 500 may further include conflict policies 551, security policies 581, and database 590.

The context collection module 510 collects respective pieces of first context CT1 from the plurality of sensor units 610 of the integrated sensor unit 600, and transmits the respective pieces of first context CT1 to the translation module 530.

In this case, a communication scheme usable by the context collection module 510 to collect the first context CT1 from the integrated sensor unit 600 may include, for example, Ethernet, WiFi, 3G/4G, Power Line Communication (PLC), Bluetooth, Ultra Wideband (UWB), and Zigbee. The communication scheme to be used may be selected according to the type of a sensor providing the first context CT1 and the characteristics of the first context CT1. That is, the first contact CT1 collected from the integrated sensor unit 600 may have various characteristics corresponding to the types of the sensors forming the sensor unit 610, and depending on the characteristics of the first context CT1, the communication scheme between the context collection module 510 and the integrated sensor unit 600 is selected.

In addition, the context collection module 510 finds a new sensor in cooperation with the resource management module 520 or checks the availability of registered sensors.

The resource management module 520 provides the context collection module 510 with a list of sensors usable for the first context CT1 collection.

In addition, the resource management module 520 periodically checks the availability of sensors existing in the list to maintain the list of sensors in the latest state.

To this end, the resource management module 520, for example, automatically finds a new sensor through a designated protocol and adds the found new sensor to the list of sensors. In addition, the resource management module 520 maintains the list of sensors having a sensor is found and added by the resource management module 520 and a sensor added through input by a user or an administrator.

The translation module 530 converts different forms of first context CT1, which are collected from the plurality of sensors 610, into a common form, thereby producing respective pieces of common context C_CT1 corresponding to the respective pieces of first context CT1. In addition, the translation module 530 delivers the produced respective pieces of common context C_CT1 into the change detection module 540.

The reason why the respective pieces of first context CT1 are converted into a common form is that the respective pieces of context CT1 generated from various domains have different forms according to the characteristics of the first context CT1 and the characteristics of the sensor unit 610, and by converting the respective pieces of first context CT1 into a common form, the U-CoUDE 500 may comprehensively handle the respective pieces of context CT1. That is, by producing respective pieces of common context C_CT1 corresponding to the respective pieces of first context CT1, an upper level element of the translation module 530, for example, the change detection module 540 or the conflict resolution module 550 may perform a standardized operation. That is, the translation module 530 may convert the different forms of first context CT1 into ontology models of a standardized form, thereby ensuring the interoperability.

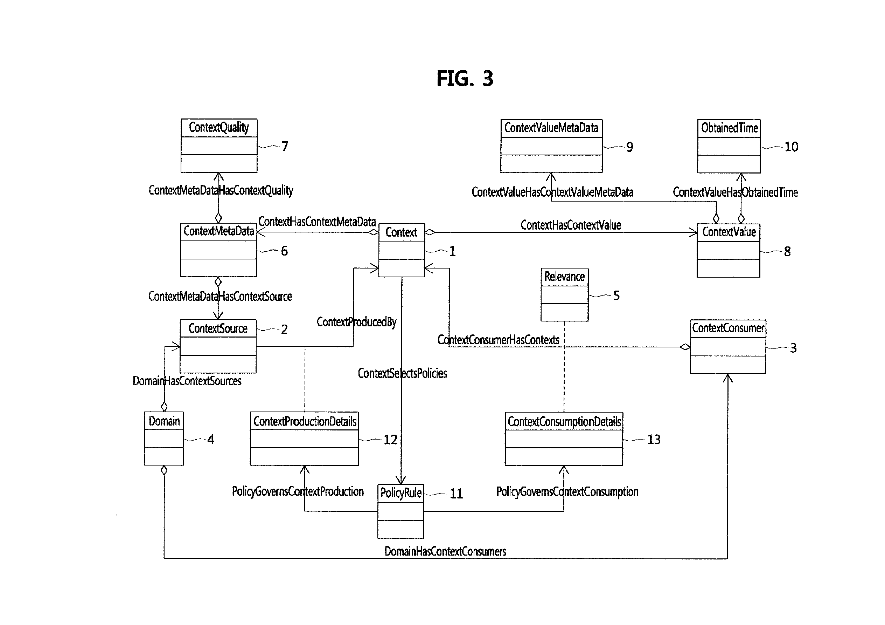

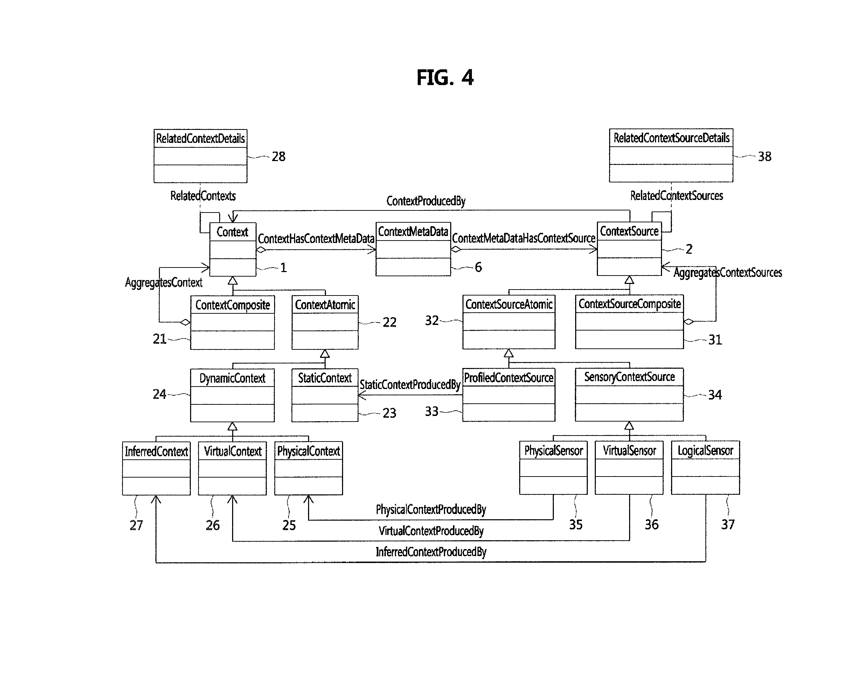

The following description will be made in relation to a context model and a hierarchical relationship module between context and a provider of context that may be used to enable the respective pieces of context CT1 to maintain a standardized ontology model by the translation module 530 converting the different forms of first context CT1 into respective pieces of common context C_CT1 that correspond to the different from of first context CT1 while having a common form, with reference to FIGS. 3 and 4.

FIG. 3 is a view illustrating a conceptual structure of a context model according to an embodiment of the present invention. FIG. 4 is a view illustrating a conceptual structure of a hierarchical relationship model between context and a provider of context according to an embodiment of the present invention.

First, a context model capable of effectively representing different forms of context will be described with reference to FIG. 3.

Context 1 is produced by ContextSource 2 (ContextProducedBy) and consumed by ContextConsumer 3 (ContextConsumerHasContext).

The ContextSource 2 corresponds to various types of sensors and information directly input by user or administrator. The ContextSource 2, for example, may be an acceleration sensor, a WiFi network interface, a digital compass, or a GPS.

In addition, the ContextSource 2 is located at Domain 4 (DomainHasContextSources). The Domain 4 may represent smartphones, smart homes or smart TVs.

In this case, a single Domain 4 may have a plurality of ContextSources 2, in detail, the Domain 4 referred as smartphone may have an acceleration sensor ContextSource, a WiFi network interface ContextSource, a digital compass ContextSourceor, or a GPS ContextSource.

The ContextConsumer 3 represents an entity configured to provide a context application service or produce new context through inference. In addition, the ContextConsumer 3 is located at the Domain 4 (DomainHasContexConsumer), and the Domain 4 may include a plurality of ContextConsumers 3.

Relevance 5 is a value quantitatively representing the relevance between the ContextConsumer 3 and Context 1. That is, the Relevance 5 is a value calculated in consideration of the importance, the influence, the usability, the priority order, the proximity in time and location, and the applicability that are given to the Context 1 in the position of the ContextConsumer 3. For example, ContextConsumer 3 related to a user named as 'Hong-GilDong' gives a higher Relevance 5 to Context 1 that is regionally close to the user 'Hong-GilDong' and contains the latest information.

The Context 1 has ContextMetaData 6 (ContexHasContextMetaData). The ContextMetaData 6 represents surrounding information around the Context 1 related to the Context 1. The surrounding information may be the type of the Context 1, the authentication related information, or the list of ContextConsumers 3 having permission.

In addition, the ContextMetaData 6 has ContextSource 2 and ContextQuality 7 (ContextMetaDataHasContextSource and ContextMetaDataHasContextQuality). Accordingly, the ContextMetaData 6 obtains surrounding information about the Context 1 related to the Context 1, and the ContextQuality 7 describes the quality of information used as the Context 1 by use of the surrounding information about the Context 1.

The ContextQuality 7 represents an indicator describing the quality of information used as the Context 1. The indicator representing the quality of the Context 1 may be precision, probability of correctness, trustworthiness, resolution, or up-to-date.

The Relevance 5 and the ContextQuality 7 are similar in that the Relevance 5 and the ContextQuality 7 each represents a value related to the Context 1, and are different in that the Relevance 5 is determined by dynamic interaction between the Context 1 and the ContextConsumer 3 but the ContextQuality 7 represents the quality of the Context 1 itself.

The Context 1 has ContextValue 8 (ContextHasContextVaule). The ContextValue 8 represents an actual value of the Context 1. For example, a GPS Context for the smartphone may have ContextValue 8 in the form of coordinates (37.77, -122.41) composed of the latitude of 37.77 and the longitude of 122.41.

In order for the ContextValue 8 to represent an actual value of the Context 1, the ContextValue 8 has ContextValueMetaData 9 and ObtainedTime 10 (ContextValueHas ContextValueMetaData and ContextValuehasObtainedTime).

Here, the ContextValueMetaData 9 includes static information, such as a unit of the actual value of the Context 1, a period of extracting samples, or explanation. In detail, for example, the ContextValueMetaData 9 may be the degree representing the unit of the latitude and the longitude in the coordinates (37.77, -122.41) of the GPS Context.

The ObtainedTime 10 includes a dynamic value of the ContextValue 8. In detail, the ObtainedTime 10 may be the numeral value such as 37.77 or -122.41 in the coordinates (37.77, -122.41) of the GPS Context.

The reason why the ContextValueMetaData 9 is distinguished from the ObtainedTime 10 is that the ContextValueMetaData 9, which represents static information such as a unit of the Context 1, is not frequently changed, but the ObtainedTime 10 needs to be changed whenever the ContextValue 8 is updated.

The Context 1 selects PolicyRule 11 to govern an input admitted from the ContextSource 2 and an output in response to a request by the ContextConsumer 3.

The PolicyRule 11 governs input so as to produce Context 1 supplied from ContextSource 2 authenticated through ContextProductionDetails 12 (PolicyGovensContextProduction).

In addition, the PolicyRule 11 govens output such that ContextConsumer 3 authorized through ContextConsumptionDetails 13 receives Context 1.

Through this, the Context 1 containing highly sensitive and private information is protected against an unauthenticated update or a request having no permission.

Hereinafter, the hierarchy relationship between the Context (1 in FIG. 3) and the ContextSource (2 in FIG. 3) will be described with reference to FIG. 4.

Referring to FIG. 4, a composite pattern is applied to the Context 1 and the ContextSource 2. The composite pattern is a design pattern to divide objects, and allows an object group to be dealt as a single object. The composite pattern is configured to represent part-whole hierarchies by composing objects in a tree structure. Such a concept is similar to \the concept of a folder of the Windows operating system. For example, the folder may include a file and a folder, and a lower level folder may include a file and a folder again.

First, the Context 1 is produced by the ContextSource 2 (ContextProducedBy). In this case, the Context 1 has the ContextMetaData 6 (ContextHasContextMetaData), and the ContextMetaData 6 has the ContextSource 2 (ContextMetaDataHasContextSource).

Here, for the hierarchical structure of the ContextSource 2, ContextSourceComposite 31 to produce the ContextSource 2 is present, and the ContextSourceComposite 31 may have Sub-ContextSourceComposite (not shown) or ContextSourceAtomic 32. Here, the ContextSourceAtomic 32 represents a single ContextSource prior to aggregated ContextSource 2. The ContextSourceComposite 31 produces the ContextSource 2 by aggregating the ContextSourceAtomic 32 corresponding to a single ContextSource (AggregatesContextSource).

The ContextSourceAtomic 32 is divided into ProfiledContextSource 33 and SensoryContextSource 34. The ProfiledContextSource 33 represents ContextSourceAtomic directly input by a user or an administrator, and the SensoryContextSource 34 represents ContextSourceAtomic input by various sensors.

Here, the SensoryContextSource 34 may be divided into lower level groups, for example, into PhysicalSensor 35, VirtualSensor 36, and LogicalSensor 37.

The PhysicalSensor 35 represents a sensor composed of physical hardwares, the VitualSensor 36 represents a sensor using a software application program or a service located in a cyber-space formed by a computer network, and the LogicalSensor 37 represents a sensor providing new context by aggregating and inferring context from the physical, virtual, and logical sensors.

Meanwhile, RelatedContextSourceDetails 38 represents the relationship between the ContextSource 2 and RelatedContextSource that is related to the ContextSource 2.

For the hierarchical structure of the Context 1, ContextComposite 21 to produce the Context 1 is present, and the ContextComposite 21 may have Sub-ContextComposite (not shown) and ContextAtomic 22. Here, the ContextAtomic represents a single Context prior to aggregated Context 1, and the ContextComposite 21 produces the Context 1 by aggregating the ContextAtomic 22 corresponding to a single Context (AggregatesContext).

The ContextAtomic 22 is divided into StaticContext 23 and DynamicContext 24, and the StaticContext 23 is static context produced by a direct input admitted by an administrator or a user. That is, the StaticContext 23 is produced by the ProfiledContextSource 33 (StaticContextProducedBy).

The DynamicContext 24 is dynamic context and may be divided into lower level groups. For example, the DynamicContext 24 may be divided into PhysicalContext 25, VirtualContext 26, and InferredContext 27.

Here, the PhysicalContext 25 is context collected by the PhysicalSensor 35 (PhysicalContexProducedBy), the VirtualContext 26 is context collected by the VitualSensor 36 (VirtualContextProducedBy), and the InferredContext 27 is context collected by the LogicalSensor 37 (InferredContextProducedBy).

Meanwhile, RelatedContextDetails 28 represents a relationship between the Context 1 and RelatedContext that is related to the Context 1.

That is, the translation module (530 in FIG. 2) of the U-CoUDE (500 in FIG. 2) according to an embodiment of the present invention converts the different forms of first context (CT1 in FIG. 2) into respective pieces of common context (C_CT1 in FIG. 2), which are standardized ontology models, by use of the context model and the hierarchical model between the context and the provider of the context according to an embodiment of the present invention, thereby ensuring the interoperability.

Referring again to FIG. 2, the configuration of the U-CoUDE 500 according to an embodiment of the present invention will be described.

The change detection module 540 determines the presence of a difference between the common context C_CT1 and the aggregated context T_CT1, and depending on the presence of the difference, determines whether to transmit the common context C_CT1. That is, the change detection module 540 determines whether to call the conflict resolution module 550 depending on the presence of the difference between the common context C_CT1 and the aggregated context T_CT1. Here, the aggregated context T_CT1 represents context having been stored in the database 590.

In detail, in a case in which the common context C_CT1 has a meaning different from a meaning of the aggregated context T_CT1, that is, a difference is present, the change detection module 540 calls the conflict resolution module 550 by transmitting the common context C_CT1 to the conflict resolution 550. On the contrary, in a case in which the common context C_CT1 does not have a different meaning from a meaning of the aggregated context T_CT1, that is, a difference is not present, the change detection module 540 does not call the conflict resolution module 550 without transmitting the common context C_CT1 to the conflict resolution module 550.

As described above, the change detection module 540 calls an upper level element in a case in which the common context C_CT1 has a meaning different from a meaning of the aggregated context T_CT1, thereby reducing the overhead.

The determining on the presence of the difference between the common context C_CT1 and the aggregated context T_CT1 is performed by use of a threshold-based scheme for efficiency of operation.

Meanwhile, the change detection module 540 may be turned on or off depending on whether the common context C_CT1 is an emergency context. In detail, if the common context C_CT1 is an emergency context, the change detection module 540 is turned off so that the determining on the presence of the difference between the common context C_CT1 and the aggregated context T_CT1 is omitted. The emergency context may be a car accident, fire, and disaster.

The conflict resolution module 550 classifies transmitted respective pieces of common context C_CT1 according to types, and produces non-conflict common context NC_CT1 by resolving the conflict between the transmitted respective pieces of common context C_CT1 within the same type. In addition, the conflict resolution module 550 transmits the non-conflict common context NC_CT1 having resolved the conflict to the database 590. At this time, the transmitted non-conflict common context NC_CT1 is stored in the database 590 and becomes the aggregated context T_CT1.

In detail, a conflict may occur between respective pieces of context that are produced and obtained from various domains. For example, in a case in which the temperature obtained from the smart home is 28°C and the temperature obtained from the smartphone located at the smart home is -5°C, one of the two temperatures is regarded as providing wrong information and causing a conflict. Accordingly, the conflict resolution module 550 resolves the conflict, thereby providing reliable context.

To this end, in a case in which the conflict resolution module 550 receives different types of common context C_CT1 from the change detection module 540, the conflict resolution module 550 distinguishes the different types of common context C_CT1 according to a same type. In addition, the conflict resolution module 550 compares the respective pieces of context C_CT1 with each other that belong to the same type, and if the difference exceeds a threshold value, determines that a conflict occurs and resolves the conflict.

The resolving of a conflict at the conflict resolution module 550 may be performed using various methods. In a first method, a single value having the best quality among the respective pieces of context having conflicts is selected. In a second method, the respective pieces of context having conflicts are comprehensively exploited to produce a new value. For example, the conflict resolution module 550 may have a new value by calculating an average between the respective pieces of context having conflict.

Meanwhile, in order for the conflict resolution module 550 to perform such an operation, the conflict resolution module 550 is controlled by the conflict policies 551. That is, the conflict policies 551 performs control such that the conflict resolution module 550 classifies the respective pieces of conflict C_CT1 according to a same type and performs a confliction detection and a conflict resolution within the same type.

The inference module 560 infers a new inferred aggregated context IT_CT1 by use of the respective pieces of aggregated context T_CT1 stored in the database 590, and stores the new inferred aggregated context IT_CT1 in the database 590. In this case, the inferred aggregated context IT_CT1 is stored in the database 590 and becomes the aggregated context T_CT1.

As a method of inferring the respective pieces of aggregated context T_CT1, for example, fuzzy logic, machine learning, or ontology based methods are widely used, but since the U-CoUDE 500 needs to handle context of various domains, the inference method is not limited thereto and all types of inference methods may be used in the form of a plug-in (a program integrated with a massive application so as to enable addition of a certain function).

The context service module 570 provides the context-aware application 700 with the aggregated context T_CT1 stored in the database 590. As a technology usable by the context service module 570, a web-service based method may be used, for example, Simple Object Access Protocol (SOAP).

The security module 580 serves to protect the aggregated context T_CT1 against an unauthenticated update and a request having no permission. In detail, the security module 580 allows the context collection module 510 to pass through an authentication process at the time of collecting first context CT1 from the sensor unit 610 such that first context CT1 that is not counterfeited or forged is selected and taken by the context collection module 510. In addition, the security module 580 allows the aggregated context T_CT1 to be provided to the context-aware application 700 having permission, thereby preventing personal information leak.

Meanwhile, the security module 580 is controlled by the security policies 581 to perform the functions as the above. Such an operation corresponds to the PolicyRule (11 in FIG. 2) of the context model suggested in FIG. 2.

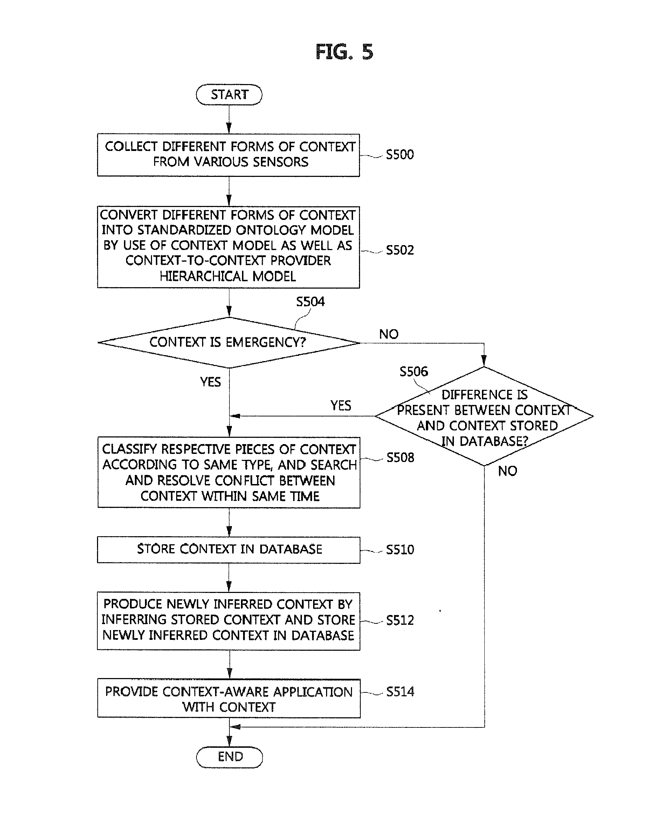

Hereinafter, a method of managing user-centric context will be described with reference to FIG. 5.

FIG. 5 is a flowchart schematically showing a method of managing user-centric context according to an embodiment of the present invention.

Referring to FIG. 5, different forms of context are collected from various first sensors (S500).

The different forms of context are converted into standardized ontology models by use of the context model of FIG. 3 and the hierarchical model between context and a provider of context illustrated in FIG. 4 (S502).

Whether each of the standardized respective pieces of context corresponds to an emergency is determined (S504). In this case, depending on whether the context corresponds to an emergency, the following operation may vary.

In detail, in a case in which the context does not correspond to an emergency, the respective pieces of context are compared with the context stored in the database to determine whether a difference in the meaning is present (S506). In a case in which a difference in the meaning between the context and the existing context is not present, the process is ended. Meanwhile, in a case in which a difference in the meaning between the context and the existing context is present, the respective pieces of context are classified according to a same type, and a conflict between respective pieces of context within the same type is searched and resolved (S508).

Meanwhile, in a case in which the context corresponds to an emergency, the determining on the difference between the context and the existing context may be omitted, and the control mode enters to the operation S508 classifying the respective pieces of context according to the same type and performing the conflict search and resolution (S508).

The context resolved with conflict is stored in database (S510), and then newly inferred context is produced by inferring the stored context and the newly inferred context is stored in the database (S512).

The respective pieces of context stored in the database are provided to the context-aware application (S514).

According to the embodiments of the present invention, the apparatus and method for managing user-centric context are used so that the context generated from various domains is represented in a flexible and extensible form.

While the example embodiments of the present invention and their advantages have been described in detail, it should be understood that various changes, substitutions and alterations may be made herein without departing from the scope of the invention.

## Claims

1. An apparatus for managing user-centric context, the apparatus comprising:
a sensor level unit including a plurality of sensors and configured to transmit respective pieces of first context collected from the plurality of sensors;
a domain level unit including a plurality of domain context management modules (domain_U-CoUDE) configured to produce a first inferred context by aggregating and inferring a corresponding second context among the respective pieces of first context by use of a context model and to transmit the produced first inferred context; and
a user level unit including a plurality of user context management modules (user_U-CoUDE) configured to produce a second inferred context by aggregating and inferring the first inferred context, which is transmitted from the plurality of domain context management modules, by use of the context model.

2. The apparatus of claim 1, wherein the plurality of domain context management modules and the plurality of user context management modules produce and provide the first inferred context and the second inferred context, respectively, by use of a hierarchical model between context and a provider of context in common.

3. An apparatus for managing user-centric context, the apparatus comprising:
a translation module configured to convert different forms of context into a standardized form by use of a context model so as to produce respective pieces of common context corresponding to the different types of context, respectively;
a change detection module configured to determine a presence of difference between the respective pieces of common context and respective pieces of aggregated context stored while corresponding to the respective pieces of common context, and depending on the presence of the difference, determine whether to transmit the respective pieces of common context;
a conflict resolution module configured to classify transmitted respective pieces of common context among the respective pieces of common context according to a same type, resolve a conflict between the transmitted respective pieces of common context within the same type, and transmit a result of the resolution as the aggregated context; and
an inference module configured to infer a new inferred context by use of the aggregated context and transmit the new inferred context as the aggregated context.

4. The apparatus of claim 3, wherein the translation module produces the respective pieces of common context by use of a hierarchical model between context and a provider of context in common.

5. The apparatus of claim 3, further comprising:
a context collection module configured to collect the different forms of context from a plurality of sensors and transmit the collected different forms of context to the translation module;
a resource management module configured to provide the context collection module with a list of the plurality of sensors usable by the context collection module;
a database configured to store the aggregated context;
a context service module configured to provide a context application program with the aggregated context; and
a security module configured to protect the aggregated context against an unauthenticated update and a request having no permission to use.

6. The apparatus of claim 3, wherein the change detection module is turned on or off depending on whether the respective pieces of common context correspond to emergency context.

7. A method of managing user-centric context, the method comprising:
collecting respective pieces of first context from a plurality of sensors and transmitting the collected respective pieces of first context;
producing a first inferred context by aggregating and inferring a corresponding second context among the respective pieces of first context by use of a context model and transmitting the produced first inferred context; and
producing a second inferred context by aggregating and inferring the first inferred context by use of the context model and transmitting the produced second inferred context.

8. The method of claim 7, wherein in the producing of the first inferred context and the producing of the second inferred context, a hierarchical model between context and a provider of context that is defined as a hierarchical relationship between context and a provider of context is used in common.

9. A method of managing user-centric context, the method comprising:
a first operation, by use of a context model, converting different forms of context into a standardized form so as to produce respective pieces of common context corresponding to the different types of context, respectively;
a second operation determining a presence of difference between the respective pieces of common context and respective pieces of aggregated context stored while corresponding to the respective pieces of common context, and depending on the presence of the difference, determining whether to transmit the respective pieces of common context;
a third operation classifying transmitted respective pieces of common context among the respective pieces of common context into a same type, resolving a conflict between the transmitted respective pieces of common context within the same type, and transmitting a result of the resolution as the aggregated context; and
a fourth operation inferring a new inferred context by use of the aggregated context and transmitting the new inferred context as the aggregated context.

10. The method of claim 9, wherein in the first operation, the respective pieces of common context are produced by use of a hierarchical model between context and a provider of context, which is defined as a hierarchical relationship between context and a provider of context, in common.

11. The method of claim 9, further comprising:
collecting the different forms of context from a plurality of sensors;
storing the aggregated context in a database; and
providing the aggregated context to a context application program.

12. The method of claim 9, wherein the second operation is omitted in a case in which the respective pieces of context correspond to an emergency situation.
